(19) **Europäisches Patentamt European Patent Office Office européen des brevets**

(11) **EP 4 625 218 A1**

(12) **EUROPEAN PATENT APPLICATION**
published in accordance with Art. 153(4) EPC

(43) Date of publication:
01.10.2025 Bulletin 2025/40

(21) Application number: 23961691.5

(22) Date of filing: 25.12.2023

(51) International Patent Classification (IPC):
*G06F 21/32* (2013.01)

(52) Cooperative Patent Classification (CPC):
G06F 21/32

(86) International application number:
PCT/JP2023/046496

(87) International publication number:
WO 2025/141668 (03.07.2025 Gazette 2025/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Rakuten Group, Inc.
Setagaya-ku
Tokyo 158-0094 (JP)

(72) Inventors:
• LEE, Sehyung
Tokyo 158-0094 (JP)
• CHAE, Yeongnam
Tokyo 158-0094 (JP)

(74) Representative: Hoffmann Eitle
Patent- und Rechtsanwälte PartmbB
Arabellastraße 30
81925 München (DE)

(54) **MOVING IMAGE PROCESSING SYSTEM, MOVING IMAGE PROCESSING METHOD, AND PROGRAM**

(57) A moving image data acquisition module (201) of a moving image processing system (1) acquires moving image data relating to a moving image in which a face of a user conducting a predetermined motion is shown. A feature point detection module (202) detects a plurality of feature points relating to the face based on the moving image data. An estimation module (203) estimates whether or not a two-dimensional face is shown in the moving image data based on a position change in each of the plurality of feature points in the moving image data and a learning model which has learned training data relating to a position change in each of a plurality of feature points relating to a face for training.

FIG.4

EP 4 625 218 A1

**Description**

Technical Field

The present disclosure relates to a moving image processing system, a moving image processing method, and a program.

Background Art

Hitherto, there has been investigated a technology for preventing impersonation by a malicious person. For example, in Patent Literature 1, there is described a technology of executing face authentication through use of a three-dimensional camera capable of detecting a depth and a thermal camera capable of detecting a temperature. Even when a malicious person uses a photograph on which the face of another person is printed or a screen on which the face of the another person is displayed to try to impersonate the another person, it is considered that the impersonation by the malicious person can be prevented through use of the three-dimensional camera and the thermal camera as described in Patent Literature 1.

Citation List

Patent Literature

[PTL 1] JP 2023-029968 A

Summary of Invention

Technical Problem

However, in order to estimate whether or not a two-dimensional face is shown in moving image data, the related-art technology requires special hardware such as the three-dimensional camera and the thermal camera as described in Patent Literature 1, which are not mounted to a general computer. Thus, it is required to estimate whether or not a two-dimensional face is shown in moving image data without requiring special hardware.

One object of the present disclosure is to estimate whether or not a two-dimensional face is shown in moving image data without requiring special hardware.

Solution to Problem

According to one embodiment of the present disclosure, there is provided a moving image processing system including: a moving image data acquisition module configured to acquire moving image data relating to a moving image in which a face of a user is shown; a feature point detection module configured to detect a plurality of feature points relating to the face based on the moving image data; and an estimation module configured to estimate whether a two-dimensional face is shown in the moving image data based on a position change in each of the plurality of feature points in the moving image data and a learning model which has learned training data relating to a position change in each of a plurality of feature points relating to a face for training.

Advantageous Effects of Invention

According to the present disclosure, for example, it is possible to estimate whether or not a two-dimensional face is shown in moving image data without requiring special hardware.

Brief Description of Drawings

FIG. 1 is a diagram for illustrating an example of a hardware configuration of a moving image processing system.
FIG. 2 is a diagram for illustrating an example of screens displayed on a user terminal.
FIG. 3 is a diagram for illustrating an example of a scene in which a malicious user conducts impersonation.
FIG. 4 is a diagram for illustrating an example of functions implemented in the moving image processing system.
FIG. 5 is a table for showing an example of a training database.
FIG. 6 is a table for showing an example of a user database.
FIG. 7 is a diagram for illustrating an example of processing applied to each frame of moving image data.
FIG. 8 is a diagram for illustrating an example of processing applied to the entire moving image data.
FIG. 9 is a flowchart for illustrating an example of processing executed in the moving image processing system.
FIG. 10 is a flowchart for illustrating the example of the processing executed in the moving image processing system.
FIG. 11 is a diagram for illustrating an example of functions implemented in modification examples.
FIG. 12 is a diagram for illustrating an example of a learning model in Modification Example 1.

Description of Embodiments

[1. Hardware Configuration of Moving Image Processing System]

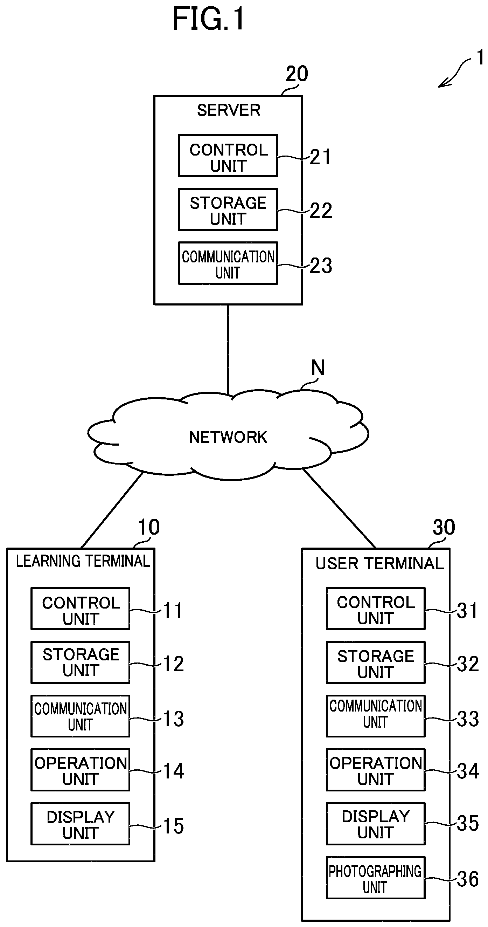

An example of a moving image (video) processing system, a moving image (video) processing method, and a program according to an embodiment of the present disclosure is described. FIG. 1 is a diagram for illustrating an example of a hardware configuration of the moving image processing system. For example, a moving image processing system 1 includes a learning terminal 10, a server 20, and a user terminal 30. The learning terminal 10, the server 20, and the user terminal 30 are each connected to a network N, such as the Internet or a LAN.

The learning terminal 10 is a computer which executes learning of a learning model described later. For example, the learning terminal 10 is a personal computer, a tablet terminal, or a smartphone. For example, the learning terminal 10 includes a control unit 11, a storage unit 12, a communication unit 13, an operation unit 14, and a display unit 15. For example, the control unit 11 includes at least one processor. The storage unit 12 includes at least one of a volatile memory such as a RAM, or a non-volatile memory such as a flash memory. The communication unit 13 includes at least one of a communication interface for wired communication or a communication interface for wireless communication. The operation unit 14 is an input device such as a touch panel or a mouse. The display unit 15 is a display such as a liquid crystal display or an organic EL display.

The server 20 is a server computer which stores the trained learning model. For example, the server 20 includes a control unit 21, a storage unit 22, and a communication unit 23. Hardware configurations of the control unit 21, the storage unit 22, and the communication unit 23 may be the same as those of the control unit 11, the storage unit 12, and the communication unit 13, respectively.

The user terminal 30 is a computer of a user. For example, the user terminal 30 is a personal computer, a smartphone, a tablet terminal, or a wearable terminal. For example, the user terminal 30 includes a control unit 31, a storage unit 32, a communication unit 33, an operation unit 34, a display unit 35, and a photographing unit 36. Hardware configurations of the control unit 31, the storage unit 32, the communication unit 33, the operation unit 34, and the display unit 35 may be the same as those of the control unit 11, the storage unit 12, the communication unit 13, the operation unit 14, and the display unit 15, respectively. The photographing unit 36 includes at least one camera.

Programs stored in the storage units 12, 22, and 32 may be supplied to the learning terminal 10, the server 20, or the user terminal 30 through the network N. Moreover, the learning terminal 10, the server 20, or the user terminal 30 may include at least one of a reading unit (for example, a memory card slot) for reading a computer-readable information storage medium or an input/output unit (for example, a USB port) for inputting/outputting data from/to an external device. For example, a program stored in the information storage medium may be supplied to the learning terminal 10, the server 20, or the user terminal 30 through at least one of the reading unit or the input/output unit.

Further, the moving image processing system 1 is only required to include at least one computer. The computers included in the moving image processing system 1 are not limited to the example of FIG. 1. For example, the moving image processing system 1 may include only the learning terminal 10 and the server 20. In this case, the user terminal 30 exists outside the moving image processing system 1. The moving image processing system 1 may include only the server 20. In this case, the learning terminal 10 and the user terminal 30 exist outside the moving image processing system 1. The moving image processing system 1 may include only the server 20 and a computer not shown in FIG. 1.

[2. Overview of Moving Image Processing System]

In this embodiment, there is exemplified a case in which the face of a user is photographed by the photographing unit 36 for identity verification for the user. The identity verification is processing for verifying identity of the user. For example, electronic know your customer (eKYC) is a type of the identity verification. The identity verification may be executed in any scene of any service. For example, the identity verification is executed when the user uses or executes membership registration for a payment service, a financial service, a communication service, an electronic commerce service, an administrative service, or other services.

For example, when a scene in which the identity verification is required arrives, the user terminal 30 starts the photographing unit 36. The photographing unit 36 continuously photographs the face of the user in a moving image mode. The user terminal 30 generates moving image data indicating the face of the user based on a photographing result obtained by the photographing unit 36. The user terminal 30 transmits the moving image data to the server 20. The server 20 executes processing for the identity verification based on the moving image data.

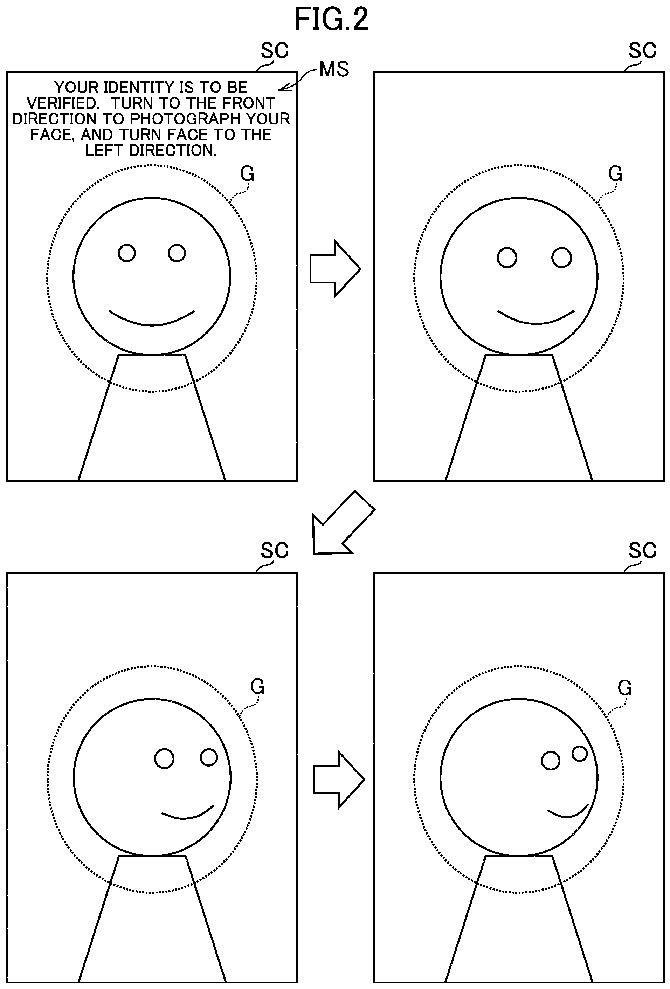

FIG. 2 is a diagram for illustrating an example of screens displayed on the user terminal 30. For example, the user terminal 30 displays a photographing screen SC indicating the photographing result obtained by the photographing unit 36 on the display unit 35. On the photographing screen SC, a guide G for providing guidance of a position of the face and a message MS indicating a motion requested of the user are displayed. In the example of FIG. 2, a motion of turning the face from a front direction to a left direction is requested of the user. The user adjusts the position and the direction of the user terminal 30 such that the face of the user himself or herself falls within the guide G, and then conducts the motion indicated by the message MS.

The motion requested of the user may be any motion. The motion requested of the user is not limited to the example of FIG. **2**. For example, a motion of turning the face from the front direction to an up direction, a motion of turning the face from the front direction to a right direction, a motion of turning the face from the front direction to a down direction, blinking, winking, or another motion may be requested of the user. As in a modification example described later, a motion requested of the user may randomly be determined from a plurality of motions. Those motions are conducted to prevent impersonation of a malicious user.

For example, the malicious user possibly uses the own user terminal 30 to photograph a paper sheet on which the face of another person is printed, to thereby conduct the impersonation. The malicious user possibly uses a second user terminal 30 to photograph a first user terminal 30 on which the face of another person is displayed, to thereby conduct the impersonation. Even when the motion of FIG. 2 is requested, the malicious user possibly, in a subtle manner, passes the identity verification.

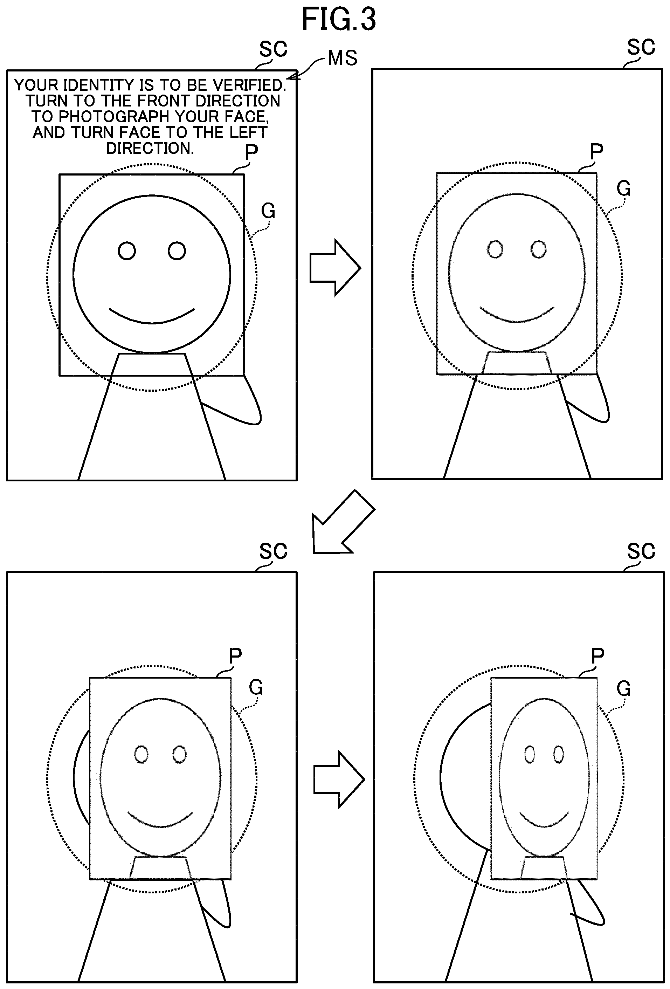

FIG. 3 is a diagram for illustrating a scene in which the malicious user conducts the impersonation. For example, the malicious user holds a paper sheet P on which the face of another person is printed in front of the face of the malicious user himself or herself such that a surface on which the face of the another person is printed is turned to the photographing unit 36. The malicious user causes the photographing unit 36 of the user terminal 30 of the malicious user himself or herself to photograph the paper sheet **P.** When the motion of turning the face from the front direction to the left direction is requested, the malicious user sometimes turns the paper sheet P from the front direction to the left direction, to thereby try to pass the identity verification.

For example, even when another motion is requested, the malicious user similarly possibly conducts a motion such as turning the paper sheet P from the front direction to the up direction, to thereby try to pass the identity verification. When a person in charge of checking in the identity verification checks the moving image data uploaded from the user terminal 30, it is considered that such impersonation can be prevented. However, when the identity verification for a large number of users is executed, it is not practical for the person in charge to check all of the pieces of moving image data. Thus, the moving image processing system 1 analyzes the moving image data, to thereby estimate whether or not a two-dimensional face is shown in the moving image data.

For example, when the photographing unit 36 is a three-dimensional camera, a stereo camera, or a thermal camera, it is considered that the moving image processing system 1 can estimate whether or not the two-dimensional face is shown in the moving image data by detecting a surface shape or a surface temperature of a subject. However, in this case, special hardware such as the three-dimensional camera, the stereo camera, or the thermal camera is required. The user terminal 30 such as a general smartphone does not include such special hardware.

Thus, the moving image processing system 1 according to this embodiment has a configuration which estimates whether or not the two-dimensional face is shown in the moving image data through the analysis of the moving image data without requiring special hardware. For example, a position change in feature point detected from each frame of the moving image data is different between a case in which a three-dimensional face is shown in the moving image data and a case in which the two-dimensional face is shown in the moving image data. The moving image processing system 1 estimates, based on a learning model which has learned those features, whether or not the two-dimensional face is shown in the moving image data. Details of the moving image processing system 1 are now described.

[3. Functions Implemented in Moving Image Processing System]

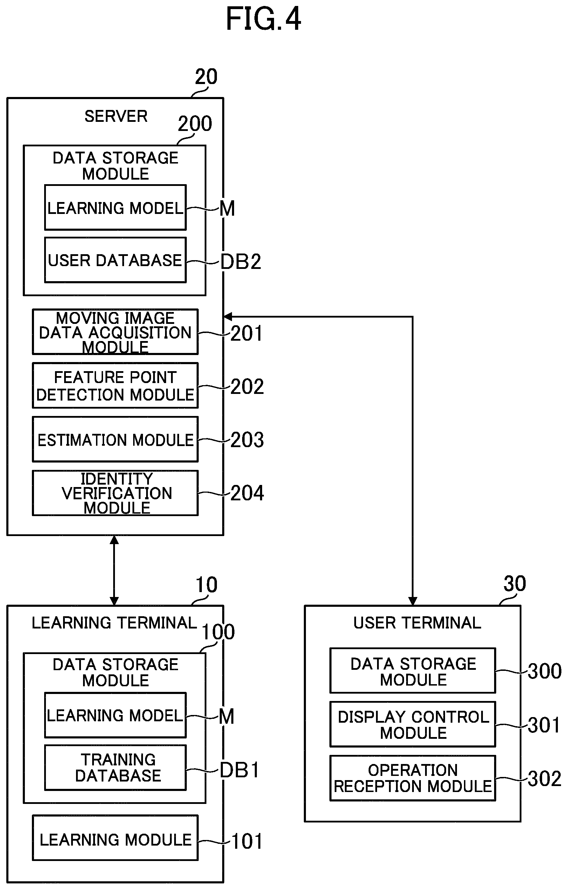

FIG. 4 is a diagram for illustrating an example of functions implemented in the moving image processing system 1.

[3-1. Functions Implemented in Learning Terminal]

For example, the learning terminal 10 includes a data storage module 100 and a learning module 101. The data storage module 100 is implemented by the storage unit 12. The learning module 101 is implemented by the control unit 11.

[Data Storage Module]

The data storage module 100 stores data required for the learning of a learning model M. For example, the data storage module 100 stores actual data on the learning model M and a training database DB1. The learning model M is a model created through a method of machine learning. The machine learning may be defined by publicly-known various definitions. The machine learning in this embodiment has a broad meaning including deep learning, reinforcement learning, and artificial intelligence (AI). For example, the learning model M may be a model of any one of supervised learning, semi-supervised learning, and unsupervised learning. It is assumed that the learning model M in this embodiment is a model of supervised learning.

As the learning model M, various models used in the field of image analysis can be used. For example, the learning model M may be a model of a neural network, a vision transformer, a support vector machine, a random forest, or other methods. The actual data on the learning model M includes a program indicating various types of processing such as calculation of embedded representation and parameters referred to by this program. For example, the parameters are weight coefficients and biases. The program and the parameters included in the actual data on the learning model M may be a program and parameters employed in a publicly-known method, respectively.

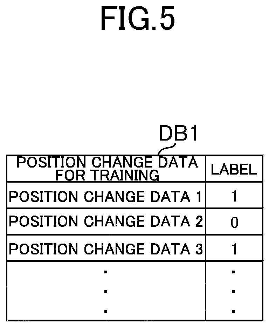

FIG. 5 is a table for showing an example of the training database DB1. The training database DB1 is a database in which training data used for the learning of the learning model M is stored. For example, the training data includes an input portion input to the learning model M at the time of the learning and an output portion indicating content to be output from the learning model M at the time of the learning. The output portion of the learning data can also be considered as a ground truth at the time of the learning. When the learning model M is a model of unsupervised learning, annotation of the training data is not executed, and hence the training data does not include the output portion.

For example, the input portion of the training data is position change data indicating a position change in each of a plurality of feature points relating to a face for training. The face for training is a face shown in a moving image prepared for the learning of the learning model M. The feature point is a characteristic portion of the face. For example, the feature point is at least one pixel indicating a portion of the face. The feature point is sometimes also called a landmark of the face. In this embodiment, there is exemplified a case in which a vertex forming a mesh indicating a surface shape of the face corresponds to the feature point.

A detection method for the feature point may be a publicly-known method. The feature point may be detected based on, for example, the Dlib library prepared in Python, which is a type of programming language. A large number of libraries for detecting the feature point are prepared also in other programming languages, and hence the feature point may be detected based on the library of another programming language. Not the library of the programming language, but a method of machine learning such as deep learning (for example, a method called deep 3D face reconstruction or RingNet) may be used to detect the feature point.

For example, the position change data corresponding to the input portion of the training data indicates a position change in each of a plurality of feature points detected from each of a plurality of frames of moving image data relating to the moving image in which the face for training is shown. The position change can also be considered as a speed or a movement amount. In this embodiment, the position change data corresponding to the input portion of the training data is generated through the same calculation method as that of the estimation module 203 described later. Details of this calculation method are described later.

In this embodiment, there is exemplified a case in which the position change data is in a vector form. For example, when the number of frames included in the moving image data is "m" ("m" is a natural number), and "k" ("k" is a natural number) feature points are detected from one frame, the position change data is a vector having at least m×k dimensions. Each element of the vector indicated by the position change data indicates the position change in a certain specific feature point corresponding to a certain specific frame.

For example, each of a first dimension to a k-th dimension of the vector indicated by the position change data indicates the position change in each of the "k" feature points detected from the first frame. A correspondence between a feature point and a dimension indicating the position change in this feature point is determined in advance such that the first dimension indicates a position change in a feature point indicating a specific place of the forehead, the second dimension indicates a position change in a feature point on the right side of the feature point indicated by the first dimension, and the third dimension indicates a position change in a feature point on the right side of the feature point indicated by the second dimension. The k+1-th and subsequent dimensions indicate position changes in the frames subsequent to the first frame. The position changes are arranged in a predetermined sequence up to the last dimension of the vector indicated by the position change data.

The position change data may be data in any form. The position change data is only required to be data relating to a time-series position change in each of the plurality of feature points of the moving image data. The position change data is not limited to the data in the vector form. For example, the position change data may be in a form of a plurality of numerical values or a single numerical value, an array form, a matrix form, or another form. The time-series position change in each of the plurality of feature points of the moving image data may be indicated by data in those forms.

For example, the output portion of the training data is a label indicating whether or not the input portion of the training data indicates the two-dimensional face. Being the two-dimensional face means not being the three-dimensional face. For example, when a paper sheet on which a face photograph of another person is printed or a computer which displays the face of the another person is shown in the moving image data for training, the input portion of the training data indicates that the face is the two-dimensional face. A surface of the paper sheet or a surface of the screen of the computer includes a two-dimensional plane, and hence the position change data (input portion of the training data) acquired from the moving image data for training indicating those surfaces indicates the two-dimensional face.

The label is classification of the input portion of the training data. The label having a first value (for example, 1) indicates that the input portion of the training data is the two-dimensional face. The label having a second value (for example, 0) indicates that the input portion of the training data is not the two-dimensional face. The value of the output portion of the training data may be specified by a creator who creates the learning model M, or may be determined by a publicly-known annotation tool.

For example, the position change data acquired from the moving image data for training indicating the three-dimensional face and the position change data acquired from the moving image data for training indicating the two-dimensional face are different from each other in features. It is considered that the difference in features correlates with whether or not the two-dimensional face is shown in the moving image data for training. It is possible to cause the learning model M to learn such a correlation through use of the training data.

When the motion of turning the face from the front direction to the left direction as illustrated in FIG. 2 is exemplified, the position changes in feature points close to the left eye or the left cheek of the two-dimensional face are larger than the position changes in feature points close to the left eye and the left cheek of the three-dimensional face. This is because the two-dimensional face printed on the paper sheet P or the two-dimensional face displayed on the screen does not have recesses and protrusions in a depth direction (perpendicular direction of the paper sheet P or the screen). Such position changes correlate with whether or not the two-dimensional face is shown in the moving image data for training (that is, the value of the label). It is possible to cause the learning model M to learn such position changes through use of the training data. Not only the position change in the left eye or the left cheek existing in the direction toward which the face is turned, but also the position changes in other portions such as the right eye and the right cheek also correlate with whether or not the two-dimensional face is shown in the moving image data for training. The learning model M can use the training data to learn such a correlation.

For example, for another motion such as a motion of turning the face from the front direction to the up direction, there is a correlation between the position changes in feature points and whether or not the two-dimensional face is shown in the moving image data for training. Thus, even for another motion, the learning model M can similarly learn this correlation by the learning model M learning training data indicating a relationship among the position change data acquired from the moving image data for training, the position changes in feature points, and whether or not the two-dimensional face is shown in the moving image data for training.

The training data is not limited to the example of FIG. 2. The training data is only required to be data indicating at least one of the features of the feature points of the three-dimensional face or the features of the feature points of the two-dimensional face. For example, the input portion of the training data may be the moving image data itself relating to the moving image in which the face for training is shown. The input portion of the training data may indicate not the position change in each of the plurality of feature points detected from each of the plurality of frames of this moving image data, but the positions of the feature points. The output portion of the training data may be a score (for example, not a binary value such as the label, but a numerical value having an intermediate value) indicating suspicion of the impersonation.

Further, the data stored in the data storage module 100 is not limited to the above-mentioned example. The data storage module 100 may store any data.

For example, the data storage module 100 may store a learning program indicating a series of processing steps at the time of the learning. The learning program may be a program employed in a publicly-known method for machine learning. For example, the learning program may be a program created based on a publicly-known method such as an error back propagation method or a gradient descent method.

[Learning Module]

The learning module 101 executes the learning of the learning model M based on the training data stored in the training database DB1. For example, the learning module 101 adjusts the parameters of the learning model M based on the publicly-known learning program such that when the input portion of the training data is input to the learning model M, the output portion of the training data is output from the learning model M, to thereby execute the learning of the learning model M. When the learning of the learning model M is completed, the learning module 101 records the trained learning model M in the data storage module 100. The learning model M before the learning may be stored in the data storage module 100 as data independent of the trained learning model M, or may be overwritten with the trained learning model **M.** The learning module 101 transmits the trained learning model M to the server 20. The trained learning model M transmitted to the server 20 is provided to the user for use.

[3-2. Functions Implemented in Server]

For example, the server 20 includes a data storage module 200, a moving image data acquisition module 201, a feature point detection module 202, an estimation module 203, and an identity verification module 204. The data storage module 200 is implemented by the storage unit 22. Each of the moving image data acquisition module 201, the feature point detection module 202, the estimation module 203, and the identity verification module 204 is implemented by the control unit 21.

[Data Storage Module]

The data storage module 200 stores data required for the estimation which uses the learning model M. For example, the data storage module 200 stores the trained learning model M and a user database DB2. In this embodiment, the learning of the learning model M is executed by the learning terminal 10, and hence the data storage module 200 stores the learning model M transmitted from the learning terminal 10. When the server 20 executes the learning of the learning model M, the server 20 has the same function as that of the learning module 101.

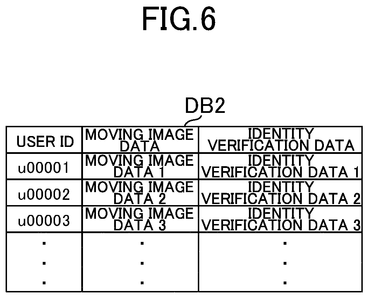

FIG. 6 is a table for showing an example of the user database DB2. The user database DB2 is a database in which various types of data relating to the users are stored. For example, in the user database DB2, user IDs, moving image data, and identity verification data are stored. In the user database DB2, any data relating to the users may be stored. The data stored in the user database DB2 is not limited to the example of FIG. 6. For example, when the identity verification is executed at a time of membership registration of the user for a certain service, data indicating a situation of application for the service may be stored in the user database DB2.

The user ID is an example of user identification information capable of identifying the user. For example, an email address or a telephone number may be used as the user identification information. The moving image data is data relating to a moving image indicating a scene in which the user indicated by the user ID conducts a motion such as turning the face from the front direction to the left direction. The moving image data may be in any data format (for example, MP4 or AVI). The user terminal 30 of the user who is the target of the identity verification transmits, to the server 20, the moving image data generated based on the photographing result obtained by the photographing unit 36. The server 20 stores the moving image data received from this user terminal 30 in association with the user ID of this user. The identity verification data is data indicating a result of the identity verification. For example, the identity verification data may indicate the estimation result obtained by the estimation module 203.

The data stored in the data storage module 200 is not limited to the above-mentioned example. The data storage module 200 may store any data. For example, the data storage module 200 may store an identity verification program indicating processing other than the processing of the estimation module 203 out of a series of processing steps for the identity verification. Processing of the identity verification module 204 described later is indicated in the identity verification program. When an identity verification document is checked simultaneously with the checking of the face of the user, the data storage module 200 may store document data indicating the identity verification document uploaded by the user.

[Moving Image Data Acquisition Module]

The moving image data acquisition module 201 acquires the moving image data relating to the moving image in which the face of the user conducting a predetermined motion is shown. The predetermined motion is a motion using the face of the user. In other words, the predetermined motion is a motion in which the position of at least one feature point changes. Still in other words, the predetermined motion is a motion different in tendency of the position change in feature point between the case in which the three-dimensional face is shown in the motion data and the case in which the two-dimensional face is shown in the moving image data. For example, a motion of changing the direction of the face, a motion of changing a position of the face, a motion using a portion of the face (for example, blinking or winking), a motion of changing an expression of the face, and other motions correspond to the predetermined motion.

In this embodiment, the moving image data is stored in the user database DB2, and hence the moving image data acquisition module 201 acquires the moving image data from the user database DB2. When the moving image data is stored in a database other than the user database DB2, the moving image data acquisition module 201 is only required to acquire the moving image data from the another database. When the moving image data is stored in a computer (for example, the user terminal 30) other than the server 20 or an external information storage medium, the moving image data acquisition module 201 is only required to acquire the moving image data from the another computer or the external information storage medium.

In this embodiment, the moving image data is generated without using special hardware such as a three-dimensional camera, a thermal camera, or the like. Thus, the moving image data acquisition module 201 acquires the moving image data generated based on the photographing result obtained by the general photographing unit 36 (for example, an RGB camera) which detects none of depth information and temperature information. For example, the general photographing unit 36 does not include a depth sensor and a temperature sensor. The moving image data includes none of depth information and temperature information on a subject, but includes only two-dimensional information (planar information) on the subject. The moving image data indicates a color of each pixel of each frame. The moving image data includes none of the depth information and the temperature information as information on each pixel.

[Feature Point Detection Module]

The feature point detection module 202 detects a plurality of feature points relating to the face based on the moving image data. The detection of the feature points is acquisition of a position of each of the feature points from the frame of the moving image data. In this embodiment, there is exemplified a case in which the position of each of the feature points is expressed as two-dimensional information, but there exists a technology of estimating three-dimensional information from a two-dimensional image, and thus this technology may be used to express the position of each of the feature points as three-dimensional information.

In this embodiment, it is assumed that a detection program for detecting the feature point is stored in the data storage module 200. As described above, the detection method for the feature point may be a publicly-known method. In the detection program, processing of a publicly-known detection method is indicated. The detection program may be a library such as the above-mentioned Dlib library, or a program of a method of machine learning such as deep learning (for example, a method called deep 3D face reconstruction or RingNet).

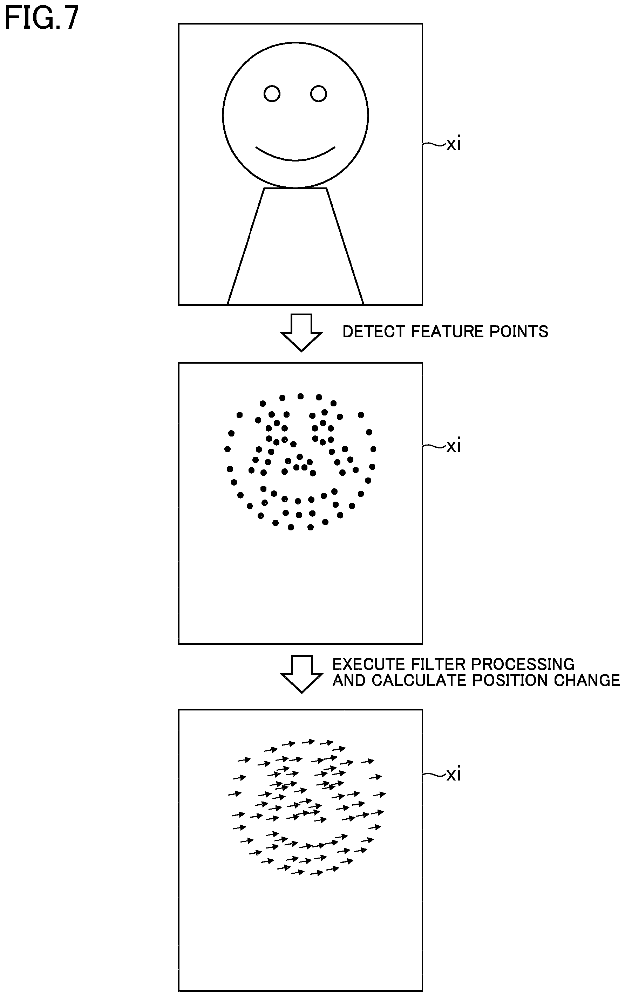

FIG. 7 is a diagram for illustrating an example of processing applied to each frame of the moving image data. A frame $x_i$ ("i" is an integer) on an upper side of FIG. 7 indicates the face of the user when the user starts to turn the face from the front direction to the left direction. The feature point detection module 202 detects a plurality of feature points from each frame $x_i$ of the moving image data based on the detection program. For example, the feature point detection module 202 detects the mesh of the face shown in the frame $x_i$ based on the detection program, and detects vertices forming the mesh as the feature points. In the frame $x_i$ at the center of FIG. 7, the feature points are indicated as points. The feature point detection module 202 records, in the data storage module 200, the feature point data indicating the plurality of feature points detected from each frame $x_i$.

For example, in the feature point data, feature point IDs and positions of the feature points are indicated. The feature point ID is an ID capable of identifying the feature point. The feature point ID may be capable of identifying a part of the face indicated by the feature point. For example, based on the feature point ID, whether the feature point is a feature point indicating the tip of the nose or a feature point indicating the rim of the right eye may be identifiable. The identification method for the feature point may be a method employed in publicly-known detection of the feature point. For example, the feature point ID may not particularly be used, and only the position of the feature point may be indicated in the feature point data.

The position of the feature point is coordinates of coordinate axes set to the frame $x_i$. For example, the position of the feature point is indicated as coordinates of coordinate axes having an origin at a left upper corner of the frame $x_i$. When the position associated with a certain feature point ID is tracked, the position change in feature point indicated by this feature point ID can be tracked. A frame $x_i$ on a lower side of FIG. 7 indicates position changes in feature points. A calculation method for the position change is described later.

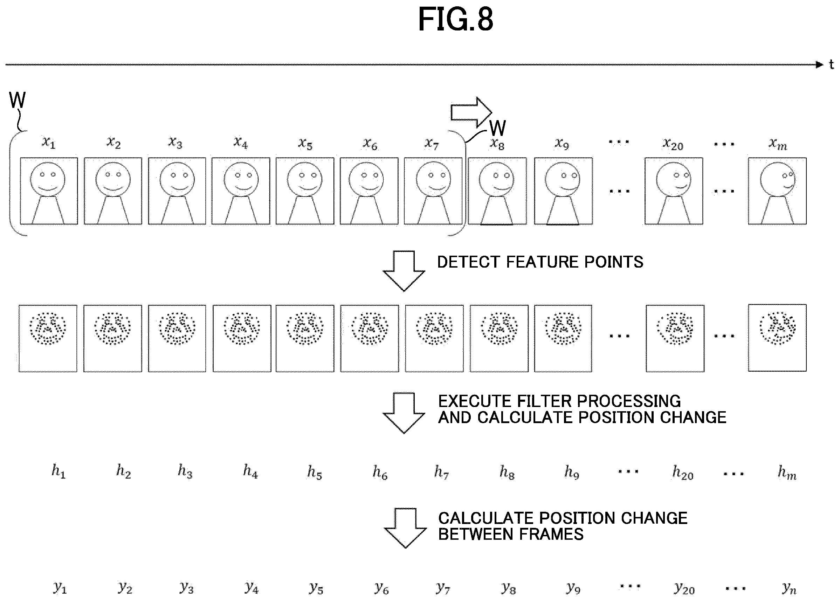

FIG. 8 is a diagram for illustrating an example of processing applied to the entire moving image data. In the example of FIG. 8, the feature point detection module 202 applies the processing described with reference to FIG. 7 to each of a frame $x_1$ to a frame $x_m$ (in FIG. 8, "m" is an integer equal to or larger than 21), to thereby detect the plurality of feature points. The feature point detection module 202 acquires the feature point data on each of the frame $x_1$ to the frame $x_m$. This feature point data can be considered as a time-series history of the feature points. In FIG. 8, position changes corresponding to the frame $x_1$ to the frame $x_m$ are indicated by reference symbol $h_1$ to reference symbol $h_m$, respectively. Reference symbol $y_1$ to reference symbol $y_n$ indicate information calculated to supplement the position change. Details of a supplementing method are described later.

The feature point detection module 202 may detect the feature points from all frames $x_i$ of the moving image data or may detect the feature points from only some of the frames $x_i$. Moreover, the number of frames $x_i$ forming the moving image data may be any number. Further, the number of frames $x_i$ being detection targets for the feature points may also be any number. For example, before the frame $x_1$, a chronologically preceding frame $x_0$ and the like may exist. Similarly, after the frame $x_m$, a chronologically following frame $x_{m+1}$ and the like may exist. In the following description, reference symbol of the frame is omitted when the reference to FIG. 7 and FIG. 8 are not required.

[Estimation Module]

The estimation module 203 estimates whether or not the two-dimensional face is shown in the moving image data based on the position change in each of the plurality of feature points in the moving image data and the learning model M which has learned the training data relating to the position change in each of the plurality of feature points relating to the face for training. The estimation module 203 calculates the position change in each of the plurality of feature points detected by the feature point detection module 202, to thereby acquire the position change data. The estimation module 203 inputs the acquired position change data to the learning model M. The learning model M calculates the embedded representation of the position change data based on the parameters adjusted through the learning. The learning model M outputs the label corresponding to this calculated embedded representation. The estimation module 203 acquires the label output from the learning model M, to thereby estimate whether or not the two-dimensional face is shown in the moving image data.

For example, the estimation module 203 calculates, for each calculation target frame being the calculation target of the position change, the position change in the calculation target frame based on at least two of the plurality of feature points detected from the calculation target frame, the plurality of feature points detected from a preceding frame being a frame before the calculation target frame, and the plurality of feature points detected from a following frame being a frame after the calculation target frame. The estimation module 203 is only required to use at least one preceding frame and at least one following frame for the calculation of the position change in the calculation target frame. The estimation module 203 may use one preceding frame and one following frame for the calculation of the position change in the calculation target frame, or may use a plurality of preceding frames and a plurality of following frames for the calculation of the position change in the calculation target frame.

In this embodiment, there is exemplified a case in which the estimation module 203 executes predetermined filter processing to suppress noise relating to the moving image data, and calculates the position change. For example, the estimation module 203 executes the filter processing on the history of the feature points detected from the moving image data. The estimation module 203 may execute the filter processing on not the history of the feature points detected from the moving image data, but the moving image data itself. The filter processing may be publicly-known filter processing which can be used for suppressing the noise. The filter processing may be publicly-known filter processing for smoothing the features in the image. The estimation module 203 may calculate the position change without executing the filter processing. In this case, the estimation module 203 does not have the function of the filter processing. The estimation module 203 which does not execute the filter processing is also included in the scope of the present disclosure.

For example, the estimation module 203 executes the filter processing which uses a derivative of Gaussian (DoG) filter. A Gaussian function used in the DoG filter may be a publicly-known function. Parameters specified by coefficients of the DoG filter may be any value. A Gaussian distribution is adjusted through the coefficients. The DoG filter is sometimes used for enhancing edges in addition to the suppression of the noise. The estimation module 203 uses the DoG filter to reduce noise occurring in at least one of the plurality of feature points and smooth the position change in each of the plurality of feature points to calculate the position change in each of the plurality of feature points.

The estimation module 203 may execute the filter processing which uses another filter other than the DoG filter. For example, the estimation module 203 may execute filter processing which uses a Gaussian filter, a Sobel filter, a median filter, or a linear filter which are not classified into the DoG filter. The estimation module 203 may execute this filter processing to calculate the position change in feature point. When a filter which cannot execute the filter processing on the history of the feature point is used, the estimation module 203 may execute the filter processing which uses a Gaussian filter, a Sobel filter, or the like on each frame of the moving image data, and then cause the feature point detection module 202 to detect each of the plurality of feature points, to thereby calculate the position change in each of the plurality of feature points.

For example, the estimation module 203 sets a local window W including the calculation target frame that is the frame being the calculation target of the position change, a preceding frame that is a frame before the calculation target frame, and a following frame that is a frame after the calculation target frame. In the example of FIG. 8, the calculation target frame is the frame $x_4$. The preceding frames are the frame $x_1$ to the frame $x_3$. The following frames are the frame $x_5$ to the frame $x_7$. The numbers of preceding frames and following frames may be any numbers. The numbers of preceding frames and following frames are not limited to three as illustrated in FIG. 8. For example, the numbers of preceding frames and following frames may be one, two, or four or more.

For example, the estimation module 203 calculates the position change in the calculation target frame based on the position of each of the plurality of feature points detected from the preceding frame and the position of each of the plurality of feature points detected from the following frame. In the example of FIG. 8, the estimation module 203 calculates the position change in the frame $x_4$ being the calculation target frame based on the position of each of the plurality of feature points detected from each of the frame $x_1$ to the frame $x_3$ being the preceding frames and the position of each of the plurality of feature points detected from each of the frame $x_5$ to the frame $x_7$ being the following frames.

For example, the estimation module 203 calculates, as the position change in the frame $x_4$ being the calculation target frame, a difference between a mean value of each of the plurality of feature points detected from each of the frame $x_1$ to the frame $x_3$ being the preceding frames and a mean value of each of the plurality of feature points detected from each of the frame $x_5$ to the frame $x_7$ being the following frames. Even when the noise is included in a certain specific frame, the noise is suppressed through the calculation of the mean values. The mean value may be a simple mean or a weighted mean. When the mean value is the weighted mean, a weight coefficient may be larger as the frame is closer to the calculation target frame.

In this embodiment, the position change in the frame $x_4$ being the calculation target frame is expressed as a vector having the number of dimensions which is the same as the number of feature points. The estimation module 203 may execute the above-mentioned filter processing on not the mean values of the positions, but the history of the feature points in the preceding frames and the following frames, to thereby suppress the noise and smooth the position changes in feature points, and then calculate the position change in the frame $x_4$ being the calculation target frame. For example, the estimation module 203 may use the DoG to track a time-series position change in each of the feature points in the frame $x_1$ to the frame $x_7$ within the local window W, to thereby calculate the position change in the frame $x_4$ being the calculation target frame.

For example, the estimation module 203 successively calculates the position change in each of the plurality of calculation target frames while moving the local window on a time axis ("t" axis in the example of FIG. 8) of the moving image data. In the example of FIG. 8, the estimation module 203 calculates the position change in the frame $x_4$, and then moves the local window W by one frame, to thereby set the frame $x_5$ as the calculation target frame. In this case, the preceding frames are the frame $x_2$ to the frame $x_4$. The following frames are the frame $x_6$ to the frame $x_8$. The estimation module 203 calculates the position change in the frame $x_5$ being the calculation

target frame based on the position of each of the plurality of feature points detected from each of the frame $x_2$ to the frame $x_4$ being the preceding frames and the position of each of the plurality of feature points detected from each of the frame $x_6$ to the frame $x_8$ being the following frames.

Subsequently, the estimation module 203 calculates the position change up to the last frame $x_m$ of the frames being the calculation target of the position change while moving the local window W by one frame at a time. When the calculation of the position change is finished, the estimation module 203 acquires the position change data on the moving image data being the estimation target. In this position change data, the position change in each feature point calculated from each frame of the moving image data being the estimation target is indicated in a time-series manner. As described above, in this embodiment, there is exemplified the case in which this position change data is in the vector form, but this position change data may be in a form other than the vector form.

In the example of FIG. 8, when the frame $x_0$ and the like preceding the frame $x_1$ exist, the frame $x_0$ and the like may be used for the calculation of the position changes in the frame $x_1$ to the frame $x_3$. When the preceding frame $x_0$ and the like do not exist, the estimation module 203 may calculate the position changes in the frame $x_1$ to the frame $x_3$ without using the local window W. Similarly, when a frame $x_{m+1}$ and the like following the frame $x_m$ exist, the following frame $x_{m+1}$ and the like may be used for the calculation of the position changes in the frame $x_m$ and the like. When the following frame $x_{m+1}$ and the like do not exist, the estimation module 203 may calculate the position changes in the frame $x_m$ and the like without using the local window W.

For example, the estimation module 203 may calculate the position change in the frame $x_1$ based on the position of each of the plurality of feature points detected from the frame $x_1$ and the position of each of the plurality of feature points detected from the frame $x_2$. For example, the estimation module 203 may calculate the position change in the frame $x_2$ based on the position of each of the plurality of feature points detected from the frame $x_2$ and the position of each of the plurality of feature points detected from the frame $x_3$. For example, the estimation module 203 may calculate the position change in the frame $x_3$ based on the position of each of the plurality of feature points detected from the frame $x_3$ and the position of each of the plurality of feature points detected from the frame $x_4$. For a frame in a last portion of the moving image data such as the frame $x_m$, the position change in this frame in the last portion may similarly be calculated.

In this embodiment, there is exemplified a case in which the estimation module 203 calculates, based on the position change in at least one frame of the moving image data and the position change in the frame next to this frame, the position change between those frames. The estimation module 203 estimates whether or not the two-dimensional face is shown in the moving image data based further on the position change between those frames. For example, the estimation module 203 calculates the position change between the frames based on the position change in at least one frame of the moving image data, a first weight coefficient associated with this frame, the position change in the frame next to this frame, and a second weight coefficient associated with this next frame.

In this embodiment, the estimation module 203 calculates a position change $y_i$ between frames for a certain frame $x_i$ based on Expression 1. The symbols $h_i$ and $h_{i+1}$ of Expression 1 are the position changes in each of the plurality of feature points detected from the frame $x_i$ and the frame $x_{i+1}$, respectively. The symbol $w_i$ of Expression 1 is the first weight coefficient. The first weight coefficient $w_i$ is as given by Expression 2. The symbol $w_{i+1}$ of Expression 1 is the second weight coefficient. The second weight coefficient $w_{i+1}$ is as given by Expression 3. The symbol "n" of Expression 2 and Expression 3 is the number of inter-frames being the calculation targets of the position changes. When the supplementation of the position change is executed between all of the inter-frames, "n" may be m-1. The number "n" may be any value.

$$y_i = w_i h_i + w_{i+1} h_{i+1}$$

$$w_i = \frac{m}{n} i - \left\lfloor \frac{m}{n} i \right\rfloor$$

$$w_{i+1} = \left\lceil \frac{m}{n} i \right\rceil - \frac{m}{n} i$$

The first weight coefficient $w_i$ and the second weight coefficient $w_{i+1}$ are not limited to the examples of Expression 2 and Expression 3. For example, the first weight coefficient $w_i$ and the second weight coefficient $w_{i+1}$ may be calculated through use of expressions which do not use such a floor function and a ceiling function as those of Expression 2 and Expression 3. The first weight coefficient $w_i$ and the second weight coefficient $w_{i+1}$ may be fixed values (for example, 0.3 and 0.7). It is assumed that a sum of the first weight coefficient $w_i$ and the second weight coefficient $w_{i+1}$ is 1. For example, the first weight coefficient $w_i$ and the second weight coefficient $w_{i+1}$ are not particularly used, and the estimation module 203 may calculate a simple mean value of the position change in at least one frame of the moving image data and the position change in a frame next to this frame as the position change between those frames.

For example, the estimation module 203 inserts the position change between frames into the position change based on each of the plurality of feature points detected from each frame, to thereby acquire final position change data. As a result of the insertion of the position change between the frames, the number of dimensions of the vector indicated by the position change data accordingly increases. Also for the position change data being the input portion of the training data, the position change between the frames may be inserted. It is assumed that the number of dimensions of the position change data being the input portion of the training data and the number of dimensions of the position change data acquired from the moving image data being the estimation target are the same. That is, it is assumed that the number of dimensions of the position change data input to the learning model M at the time of the learning and the number of dimensions of the position change data input to the learning model M at the time of the estimation are the same.

The number of dimensions of the position change data being the input portion of the training data and the number of dimensions of the position change data acquired from the moving image data being the estimation target may be different from each other. The number of dimensions of the position change data input to the learning model M at the time of the learning and the number of dimensions of the position change data input to the learning model M at the time of the estimation may be different from each other. In this case, a portion corresponding to an insufficient number in dimension may be treated as missing values. Moreover, for example, the learning model M may calculate an embedded representation such that the difference in the number of dimensions is absorbed. For example, when the embedded representation is also expressed as a vector, the number of dimensions of the embedded representation may be defined in advance. The learning model M may calculate the embedded representation having a predetermined number of dimensions independently of the number of dimensions of the position change data being the input portion of the training data and the number of dimensions of the position change data acquired from the moving image data being the estimation target. The number of dimensions of the embedded representation may not be defined in advance, and hence may be undefined.

Moreover, the estimation module 203 may determine whether or not the position change in each of the plurality of frames of the moving image data is within a reference range. The reference range serves as a reference for determining whether or not the position change between frames is to be supplemented. When, for example, the user moves the face faster than assumed, the position change may be too large for the estimation module 203 to make a precise estimation, and hence the position change being equal to or larger than a predetermined threshold value may correspond to a position change being outside the reference range. The threshold value may be freely defined by an administrator of the moving image processing system 1.

For example, the estimation module 203 determines whether or not the position change in each of the plurality of frames of the moving image data is equal to or larger than the threshold value, to thereby determine whether or not this position change is within the reference range. The position change being a determination target based on the reference range may be the position changes in all of the feature points, or may be the position changes in some of the feature points. Further, the position change being the determination target based on the reference range may be the position changes in all of the frames, or may be the position changes in some of the frames.

For example, when the position change is determined to be outside the reference range, the estimation module 203 calculates the position change between the frames. The position changes in only some of the frames in the moving image data are sometimes outside the reference range, and hence, in this case, the estimation module 203 may calculate the position changes between the frames of the some of the frames having the position changes being outside the reference range, or may calculate the position changes between the frames of all of the frames of the moving image data.

For example, when the position change is not determined to be outside the reference range, the estimation module 203 does not calculate the position change between the frames. In this case, $y_1$ to $y_n$ of FIG. 8 are not calculated, and only $h_1$ to $h_m$ are used for the estimation. The position changes in only some of the frames in the moving image data are sometimes not outside the reference range, and hence, in this case, the estimation module 203 may not calculate the position changes between the frames of the some of the frames having the position changes not determined to be outside the reference range and calculate the position changes between the frames of other frames having the position changes determined to be outside the reference range. Further, in this case, the estimation module 203 may not calculate the position changes between the frames of all of the frames of the moving image data. Moreover, independently of whether or not the position change is outside the reference range, the estimation module 203 may not calculate the position changes between the frames, and may make the estimation based on position changes calculated from the frames. In this case, the estimation module 203 may not have the function of calculating the position change between the frames.

[Identity Verification Module]

The identity verification module 204 executes the identity verification for the user based on the result of estimating whether or not the two-dimensional face is shown in the moving image data. For example, when it is estimated that the two-dimensional face is shown in the moving image data, the identity verification module 204 determines that the identity verification has failed. When it is estimated that the two-dimensional face is shown in the moving image data, the identity verification module 204 may again request the user to conduct a predetermined motion. The motion requested again may be a motion different from the motion which has been requested.

For example, when it is estimated that the two-dimensional face is not shown in the moving image data, the identity verification module 204 determines that the identity verification has been successful. When the next step (for example, photographing of an identity verification document such as a driver's license) for the identity verification is also prepared, the identity verification module 204 may cause the process to proceed to the next step of the identity verification. The step required for the identity verification may be the same as a step for publicly-known identity verification. Information processing required for this step may also be processing employed in the publicly-known identity verification. When it is estimated that the two-dimensional face is shown in the moving image data, the identity verification module 204 may give notification to a person in charge of the identity verification. In this case, the person in charge may visually check the moving image data.

[3-3. Functions Implemented in User Terminal]

For example, the user terminal 30 includes a data storage module 300, a display control module 301, and an operation reception module 302. The data storage module 300 is implemented by the storage unit 32. Each of the display control module 301 and the operation reception module 302 is implemented by the control unit 31.

[Data Storage Module]

The data storage module 300 stores data required to upload the moving image data. For example, the data storage module 300 stores the moving image data generated based on the photographing result of the photographing unit 36.

[Display Control Module]

The display control module 301 displays various screens in the moving image processing system 1 on the display unit 35. For example, the display control module 301 displays the photographing screen SC indicating the photographing result obtained by the photographing unit 36 on the display unit 35.

[Operation Reception Module]

The operation reception module 302 receives various operations in the moving image processing system 1. Data indicating details of an operation received by the operation reception module 302 is appropriately transmitted to the server 20.

[4. Processing Executed in Moving Image Processing System]

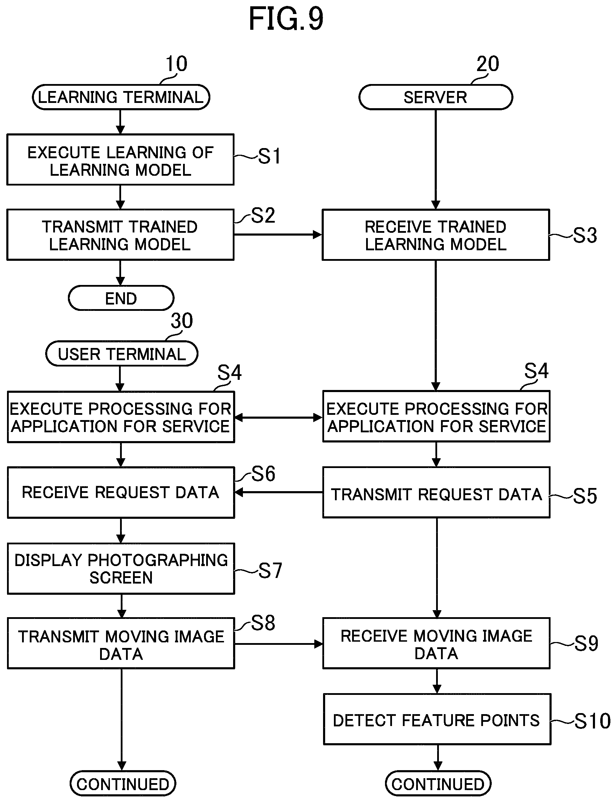

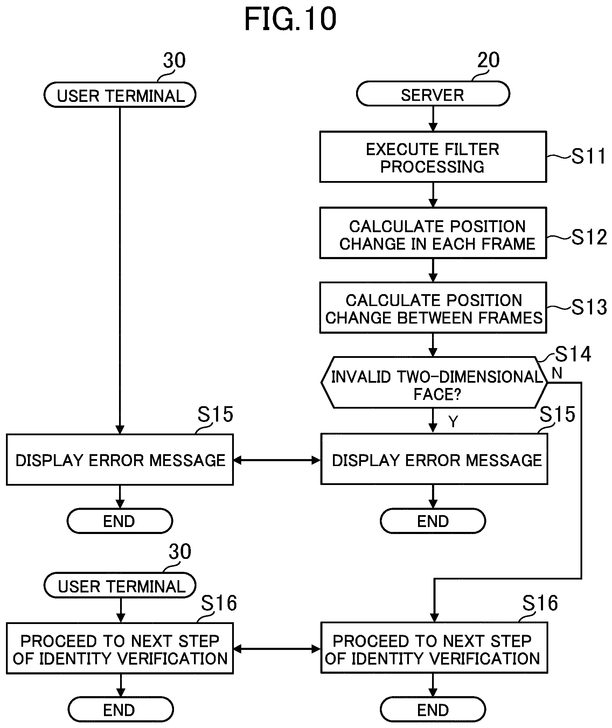

FIG. 9 and FIG. 10 are flowcharts for illustrating an example of processing executed in the moving image processing system 1. The processing of FIG. 9 and FIG. 10 is executed by the control units 11, 21, and 31 executing the programs stored in the storage units 12, 22, and 32, respectively. In the example of FIG. 9 and FIG. 10, it is assumed that the identity verification is executed when the user applies for a service.

As illustrated in FIG. 9, the learning terminal 10 executes the learning of the learning model M based on the training data stored in the training database DB1 (Step S1). The learning terminal 10 transmits the trained learning model M to the server 20 (Step S2). The server 20 receives the trained learning model M from the learning terminal 10 (Step S3). In Step S3, the server 20 records the trained learning model M in the storage unit 22.

The user terminal 30 executes the processing for the user to apply for the service between the user terminal 30 and the server 20 (Step S4). When the process proceeds to a step in which the identity verification is required, the server 20 transmits, to the user terminal 30, request data for requesting the user to conduct a predetermined motion (Step S5). The request data indicates content of the message MS. The user terminal 30 receives the request data (Step S6). The user terminal 30 starts the photographing unit 36, and displays the photographing screen SC on the display unit 35 (Step S7). The user conducts the motion guided through the message MS.

The user terminal 30 transmits the moving image data to the server 20 (Step S8). The server 20 receives the moving image data from the user terminal 30 (Step S9). The server 20 detects the plurality of feature points relating to the face of the user based on the moving image data (Step S10). The process proceeds to FIG. 10, and the server 20 executes the filter processing which uses the DoG filter (Step S11). The server 20 calculates the position change in each frame (Step S12). The server 20 may execute the processing steps of Step S11 and Step S12 while moving the local window W. The server 20 calculates the position change between the frames based on Expression 1 to Expression 3 (Step S13).

The server 20 estimates whether or not a two-dimensional face is shown in the moving image data based on the position change in each frame, the position change between the frames, and the trained learning model M (Step S14). When it is estimated that a two-dimensional face is shown in the moving image data in Step S14 (Y in Step S14), the server 20 executes processing for displaying an error message between the server 20 and the user terminal 30 (Step S15), and this processing is finished. When it is not estimated that a two-dimensional face is shown in the moving image data in Step S14 (N in Step S14), the server 20 executes processing for proceeding to the next step of the identity verification between the server 20 and the user terminal 30 (Step S16), and this processing is finished.

[5. Summary of Embodiment]

The moving image processing system 1 according to this embodiment estimates whether or not the two-dimensional face is shown in the moving image data based on the position change in each of the plurality of feature points in the moving image data and the learning model M which has learned the training data relating to the position change in each of the plurality of feature points relating to the face for training. With this configuration, the moving image processing system 1 can estimate whether or not the two-dimensional face is shown in the moving image data without preparing special hardware without preparing special hardware. For example, it is conceivable to analyze the motion shown in the moving image data through use of the optical flow without preparing special hardware. However, the optical flow is sometimes vulnerable to movement of a background, and hence accuracy is not sufficient. In this respect, it is possible to increase the estimation accuracy by focusing on the position changes in feature points of the face being a foreground. When the estimation is tried through analysis of a motion of the mouth or the like, the photographing unit 36 having a high frame rate is required, and it is also required to request the user to conduct a slow motion. However, the moving image processing system 1 can estimate whether or not the two-dimensional face is shown in the moving image data even when the photographing unit 36 can only acquire the two-dimensional information. The moving image processing system 1 can determine whether or not the person himself or herself exists on the site (liveness) by estimating whether or not the two-dimensional face is shown in the moving image data.

Moreover, the moving image processing system 1 executes the predetermined filter processing to suppress the noise relating to the moving image data, and calculates the position change. The moving image processing system 1 can increase the estimation accuracy by suppressing the noise. For example, the detection accuracy of the feature point is not perfect, and hence the position of the feature point may deviate even when the user does not move the face. Even when such a positional deviation occurs, the deviation can be suppressed as the noise through the filter processing, and hence the estimation accuracy increases.

Moreover, the moving image processing system 1 executes the filter processing which uses the DoG filter. The moving image processing system 1 can increase the estimation accuracy by effectively suppressing the noise through use of the DoG filter. The moving image processing system 1 can also smooth the position change indicated by the feature point.

Moreover, the moving image processing system 1 sets the local window W, and calculates the position change in the calculation target frame based on the position of each of the plurality of feature points detected from the preceding frame and the position of each of the plurality of feature points detected from the following frame. The moving image processing system 1 successively calculates the position change in each of the plurality of calculation target frames while moving the local window on the time axis of the moving image data. The moving image processing system 1 calculates the position change in the calculation target frame based on the plurality of feature points detected from not only any one of the preceding frame and the following frame of the calculation target frame, but both of the preceding frame and the following frame, to thereby increase the calculation accuracy of the position change.

Moreover, the moving image processing system 1 calculates, based on the position change in at least one frame of the moving image data and the position change in the frame next to this frame, the position change between those frames. The moving image processing system 1 estimates whether or not the two-dimensional face is shown in the moving image data based further on the position change between those frames. Even when there exists a variation in speed of conducting the predetermined motion among the users, the moving image processing system 1 can supplement the position change between the frames, and hence the estimation accuracy increases. For example, in a case in which the user is required to turn the face from the front direction to the left direction in three seconds, even when the user turns the face in only one second, the moving image processing system 1 supplements the position change between the frames, to thereby increase the estimation accuracy.

Moreover, the moving image processing system 1 calculates the position change between the frames based on the position change in at least one frame of the moving image data, the first weight coefficient $w_i$ associated with this frame, the position change in the frame next to this frame, and the second weight coefficient $w_{i+1}$ associated with this next frame. With this configuration, when the moving image processing system 1 calculates the position change between the frames, the moving image processing system 1 can adjust one frame of the two frames to which the weight is applied.

Moreover, the moving image processing system 1 determines whether or not the position change in each of the plurality of frames of the moving image data is within the reference range. When the position change is determined to be outside the reference range, the moving image processing system 1 calculates the position change between the frames. When it is required to supplement the position change between the frames, the moving image processing system 1 can calculate the position change between the frames. When it is not required to supplement the position change between the frames, the moving image processing system 1 can avoid the calculation of the position change between the frames.

Moreover, the moving image processing system 1 executes the identity verification for the user based on the result of estimating whether or not the two-dimensional face is shown in the moving image data. With this configuration, the moving image processing system 1 can prevent impersonation by a malicious user at the time of the identity verification.

[6. Modification Examples]

The present disclosure is not limited to the embodiment described above. The present disclosure can be modified suitably without departing from the spirit of the present disclosure.

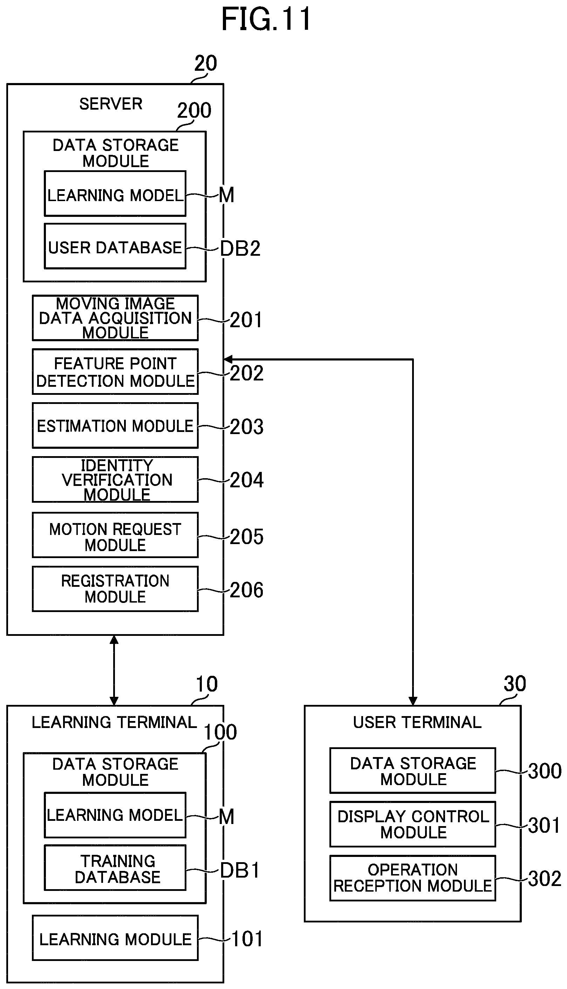

FIG. 11 is a diagram for illustrating an example of functions implemented in modification examples. As illustrated in FIG. 11, the server 20 in the modification examples includes a motion request module 205 and a registration module 206. Each of the motion request module 205 and the registration module 206 is implemented by the control unit 21.

[6-1. Modification Example 1]

For example, in the embodiment, there has been exemplified the learning model M which outputs, when the position change data is input, the label indicating whether or not the two-dimensional face is shown in the moving image data. It is only required that the learning model M be a model which has learned the position change in each of the plurality of feature points relating to the face for training. The learning model M is not limited to the example in the embodiment.

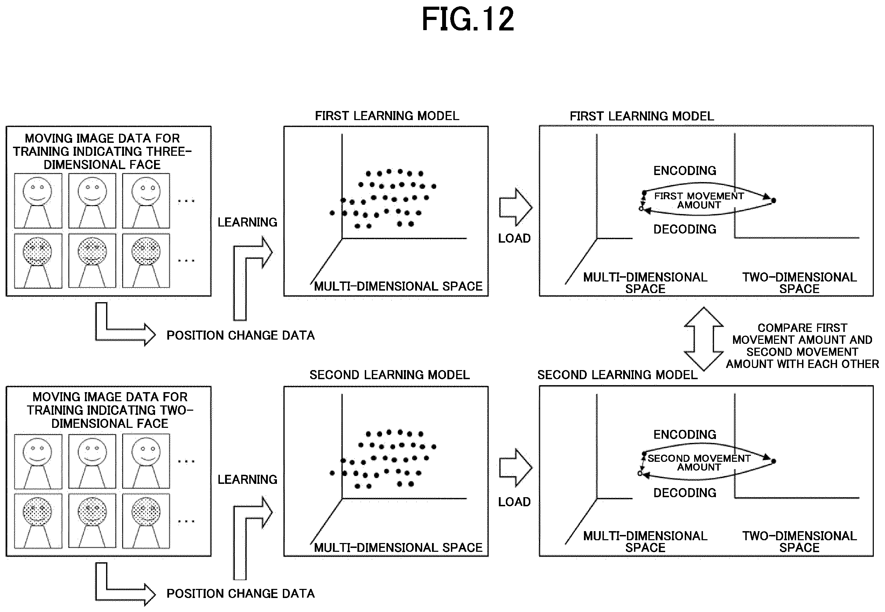

FIG. 12 is a diagram for illustrating an example of the learning model M in Modification Example **1**. The learning module 101 in Modification Example 1 executes learning of a first learning model M1 which has learned first training data relating to a position change in each of a plurality of feature points relating to a three-dimensional face for training and a second learning model M2 which has learned second training data relating to a position change in each of a plurality of feature points relating to a two-dimensional face for training.

For example, the first training data is position change data calculated from moving image data for training generated by photographing the face of a human for training through use of a camera. The acquisition method for the position change data may be the same as that in the embodiment. The second training data is position change data calculated from moving image data for training generated by photographing a medium for training through use of the camera. The medium for training is a paper sheet on which the face of the human for training is printed or a computer on which the face of the human for training is displayed. The first training data and the second training data are stored in the training database DB1. Labels may not be added to the first training data and the second training data.

For example, the learning module 101 causes the first learning model M1 to learn features indicated by the first training data. When the input portion of the first training data is the position change data and the output portion of the first training data is the label as in the embodiment, the learning module 101 adjusts parameters of the first learning model M1 such that the first learning model M1 outputs the label indicating that the input portion is not the two-dimensional face when the position change data being the input portion of the first training data is input to the first learning model M1. For example, when the label is not added to the first training data, the learning module 101 executes clustering of a plurality of pieces of first training data, and adjusts the parameters of the first learning model M1 such that pieces of first training data having features similar to one another belong to the same cluster.

For example, the learning module 101 causes the second learning model M2 to learn features indicated by the second training data. When the input portion of the second training data is the position change data and the output portion of the second training data is the label as in the embodiment, the learning module 101 adjusts parameters of the second learning model M2 such that the second learning model M2 outputs the label indicating that the input portion is not the two-dimensional face when the position change data being the input portion of the second training data is input to the second learning model M2. For example, when the label is not added to the second training data, the learning module 101 executes clustering of a plurality of pieces of second training data, and adjusts the parameters of the second learning model M2 such that pieces of second training data having features similar to one another belong to the same cluster.

The estimation module 203 in Modification Example 1 acquires the position change data relating to the feature of the position changes in a multi-dimensional space. The acquisition method for the position change data may be the same as that in the embodiment. The estimation module 203 executes, based on the first learning model M1, encoding of reducing dimensions of the position change data and decoding of restoring the dimensions of the position change data, and calculates a first movement amount being a movement amount of the position change data before and after the encoding and the decoding.

The encoding is also referred to as "dimension reduction." The method for the encoding may be a publicly-known method. For example, the estimation module 203 may reduce the dimensions of the position change data based on a method such as principal component analysis or autoencoding. A method for the decoding may also be a publicly-known method. For example, the estimation module 203 may restore the dimensions of the position change data whose dimensions have been reduced based on a method such as principal component analysis or autoencoding. The encoding and the decoding are executed based on the parameters of the first learning model M1.

For example, the estimation module 203 executes encoding and decoding based on the second learning model M2, and calculates a second movement amount being a movement amount of the position change data before and after the encoding and the decoding. The meanings of the encoding and the decoding are similar to those for the first learning model M1. The encoding and the decoding are executed based on the parameters of the second learning model M2.

For example, the estimation module 203 estimates whether or not the two-dimensional face is shown in the moving image data based on the first movement amount and the second movement amount. When the three-dimensional face is shown in the moving image data being the estimation target, the first movement amount before and after the encoding and the decoding is smaller than the second movement amount in this case. This is because a feature of this moving image data is similar to the feature of the first training data learned by the first learning model M1. When the first movement amount is smaller than the second movement amount, the estimation module 203 does not estimate that the two-dimensional face is shown in the moving image data.

Meanwhile, when the two-dimensional face is shown in the moving image data being the estimation target, the first movement amount before and after the encoding and the decoding is equal to or larger than and the second movement amount in this case. This is because the feature of this moving image data is similar to the feature of the second training data learned by the second learning model M2. When the first movement amount is equal to or larger than the second movement amount, the estimation module 203 estimates that the two-dimensional face is shown in the moving image data.

The moving image processing system 1 according to Modification Example 1 calculates the first movement amount based on the first learning model M1. The moving image processing system 1 calculates the second movement amount based on the second learning model M2. The moving image processing system 1 estimates whether or not the two-dimensional face is shown in the moving image data based on the first movement amount and the second movement amount. With this configuration, the moving image processing system 1 can increase the accuracy of estimation of whether or not the two-dimensional face is shown in the moving image data.

[6-2. Modification Example 2]

For example, in the embodiment, there has been exemplified the case in which the motion of turning the face from the front direction to the left direction is requested of the user, but the motion requested of the user is not limited to the example in the embodiment. The moving image processing system 1 according to Modification Example 2 includes the motion request module 205. The motion request module 205 requests the user to conduct a motion selected through a predetermined selection method from a plurality of motions relating to the face.

A candidate motion requested of the user is only required to be a motion relating to the face. For example, the candidate motion may be a motion of changing the direction of the face, a motion of moving a portion of the face, a motion of deforming a portion of the face, or other motions. The candidate motion may be a motion other than the motion exemplified in the embodiment. It is assumed that data indicating the candidate motions is stored in advance in the data storage module 200.

The predetermined selection method may be any method. In Modification Example 2, a case in which the selection method is a method of randomly selecting the motion is described. The method of randomly selecting the motion from the candidates may be a publicly-known method. For example, the motion request module 205 randomly selects one motion from the plurality of motions based on a random number. The motion request module 205 requests the user to conduct the selected motion. In the example of FIG. 2 and FIG. 3, the user is requested to conduct the motion through the display of the message MS, but the user may be requested to conduct the motion through another method such as output of sound.

The selection method is not limited to the method of randomly selecting the motion. For example, the selection method may be a method of selecting each of the plurality of motions in an order determined in advance. The selection method may be a method of selecting the motion in accordance with data acquired from the user terminal 30 or a feature of the user. The moving image data acquisition module 201 acquires the moving image data when the motion selected by a motion selection module is executed by the user. Modification Example 2 is different from the embodiment in the point that the moving image is selected by the motion selection module, but is the same as the embodiment in the acquisition method for the moving image data.

It is assumed that the learning model M is prepared for each motion in the data storage module 200 in Modification Example **2**. In the training database DB1 stored in the learning terminal 10, training data indicating each of the plurality of motions is stored. The learning module 101 executes, based on the training data indicating a certain motion, the learning of the learning model M corresponding to this motion. Modification Example 2 is different from the embodiment in such a point that the training data and the learning model M are prepared for each motion, but may be the same as the embodiment in the creation method itself for the learning model M.

For example, it is assumed that four motions which are a first motion of turning from the front direction to the left direction, a second motion of turning from the front direction to a right direction, a third motion of turning from the front direction to the up direction, and a fourth motion of blinking are the candidates. In this case, the learning module 101 executes the learning of four learning models M which are a learning model M for the first motion, a learning model M for the second motion, a learning model M for the third motion, and a learning model M for the fourth motion. The learning terminal 10 transmits the four trained learning models M to the server 20. The server 20 records the four trained learning model M in the data storage module 200.

The estimation module 203 in Modification Example 2 estimates whether or not the two-dimensional face is shown in the moving image data based on the learning model M corresponding to the motion selected by the motion selection module out of the learning models M each corresponding to a corresponding one of the plurality of motions. Modification Example 2 is different from the embodiment in such a point that the learning model M corresponding to the motion selected by the motion selection module out of the plurality of learning models M stored in the data storage module 200 is used for the estimation, but may be the same as the embodiment in the estimation itself based on the learning model M.

For example, when the four motions which are the above-mentioned first motion to fourth motion are the candidates, and the user conducts the first motion, the estimation module 203 executes the estimation based on the learning model M corresponding to the first motion out of the four learning models M. When the user conducts the second motion, the estimation module 203 executes the estimation based on the learning model M corresponding to the second motion out of the four learning models M. When the user conducts the third motion, the estimation module 203 executes the estimation based on the learning model M corresponding to the third motion out of the four learning models M. When the user conducts the fourth motion, the estimation module 203 executes the estimation based on the learning model M corresponding to the fourth motion out of the four learning models M.

The moving image processing system 1 according to Modification Example 2 requests the user to conduct the motion selected by the predetermined selection method from the plurality of motions. When the selected motion is conducted by the user, the moving image processing system 1 acquires the moving image data. The moving image processing system 1 estimates whether or not the two-dimensional face is shown in the moving image data based on the learning model M corresponds to the selected motion out of the learning models M each corresponding to a corresponding one of the plurality of motions. With this configuration, the moving image processing system 1 can use the learning model M appropriate for the motion conducted by the user to execute the estimation. A malicious user is required to assume various motions to pass the identity verification, and hence the impersonation is less likely to be successful.

[6-3. Modification Example 3]

For example, in the embodiment, there has been exemplified the case in which the estimation result obtained by the estimation module 203 is used for the identity verification. The estimation result obtained by the estimation module 203 can be used for any purpose other than the identity verification. In Modification Example 3, the estimation result obtained by the estimation module 203 is used when the user registers image data for face authentication. A malicious user possibly registers a face photograph of another person as the image data for face authentication, and afterward continues to use this face photograph, to thereby impersonate the another person. The moving image processing system 1 can also be used for a purpose of preventing such impersonation.

In Modification Example 3, as in Modification Example 2, it is assumed that the moving image is randomly requested. The moving image processing system 1 according to Modification Example 3 includes the registration module 206. The registration module 206 registers, as image data for face authentication for the user, a frame indicating the face of the user turned to the front direction out of the plurality of frames of the moving image data based on the result of estimating whether or not the two-dimensional face is shown in the moving image data. The registration module 206 may determine whether or not the face of the user is turned to the front direction through image analysis (for example, template matching, a method of making determination based on a shape of a contour, or a method of machine learning), or may determine a certain specific frame (for example, the first frame) as the frame indicating the face of the user turned to the front direction.

For example, when it is estimated that the two-dimensional face is shown in the moving image data, the registration module 206 does not register the image data for face authentication for the user. In this case, a malicious user is trying to register image data for impersonation through use of the face photograph of another person or the like, and hence the registration module 206 does not register the image data. When it is not estimated that the two-dimensional face is shown in the moving image data, the registration module 206 registers the image data for face authentication for the user. The image data for face authentication may be registered in the user database DB2, or may be registered in another database.

For example, the server 20 or another computer executes the face authentication based on the image data registered by the registration module 206. An authentication terminal for the face authentication includes a camera. The authentication terminal may be the user terminal 30 or another computer other than the user terminal 30. When the authentication terminal photographs the face of the user through use of the camera, the authentication terminal transmits the image data to the server 20 or the another computer. The server 20 or the another computer executes the face authentication based on the image data received from the authentication terminal and the image data registered by the registration module 206. The face authentication may be executed through a publicly-known method.

The moving image processing system 1 according to Modification Example 3 registers, as the image data for face authentication for the user, the frame indicating the face of the user turned to the front direction out of the plurality of frames of the moving image data based on the result of estimating whether or not the two-dimensional face is shown in the moving image data. The moving image processing system 1 can prevent the case in which a malicious user impersonates another person to register the image data, to thereby execute the face authentication.

[6-4. Other Modification Examples]

For example, Modification Examples 1 to Example 3 described above may be combined with one other.

For example, the functions described as those implemented in the server 20 may be implemented in another computer such as the learning terminal 10. The functions described as those implemented in the server 20 may be distributed to a plurality of computers. The functions described as those implemented in the learning terminal 10 may be implemented in another computer such as the server 20.

[7. Supplementary Notes]

For example, the moving image processing system may be configured as described below.

(1) A moving image processing system, including:

a moving image data acquisition module configured to acquire moving image data relating to a moving image in which a face of a user conducting a predetermined motion is shown;
a feature point detection module configured to detect a plurality of feature points relating to the face based on the moving image data; and
an estimation module configured to estimate whether a two-dimensional face is shown in the moving image data based on a position change in each of the plurality of feature points in the moving image data and a learning model which has learned training data relating to a position change in each of a plurality of feature points relating to a face for training.

(2) The moving image processing system according to Item (1), wherein the estimation module is configured to execute predetermined filter processing to suppress noise relating to the moving image data, and calculate the position change.

(3) The moving image processing system according to Item (2), wherein the estimation module is configured to execute the filter processing which uses a derivative of Gaussian (DoG) filter.

(4) The moving image processing system according to any one of Items (1) to (3), wherein the estimation module is configured to:

set a local window including a calculation target frame that is a frame being a calculation target of the position change, a preceding frame that is a frame before the calculation target frame, and a following frame that is a frame after the calculation target frame;
calculate the position change in the calculation target frame based on a position of each of the plurality of feature points detected from the preceding frame and a position of each of the plurality of feature points detected from the following frame; and
successively calculate the position change in each of a plurality of the calculation target frames while moving the local window on a time axis of the moving image data.

(5) The moving image processing system according to any one of Items (1) to (4), wherein the estimation module is configured to:

calculate, based on the position change in at least one frame of the moving image data and the position change in a frame next to the at least one frame, a position change between the at least one frame and the next frame; and
estimate whether the two-dimensional face is shown in the moving image data based further on the position change between the at least one frame and the next frame.

(6) The moving image processing system according to Item (5), wherein the estimation module is configured to calculate, based on the position change in at least one frame of the moving image data, a first weight coefficient associated with the at least one frame, the position change in a frame next to the at least one frame, and a second weight coefficient associated with the next frame, the position change between the at least one frame and the next frame.

(7) The moving image processing system according to Item (5) or (6), wherein the estimation module is configured to determine whether the position change in each of a plurality of frames of the moving image data is within a reference range, and calculate the position change between the at least one frame and the next frame when the position change is determined to be outside the reference range.

(8) The moving image processing system according to any one of Items (1) to (7), wherein the estimation module is configured to:

acquire position change data relating to a feature of the position change in a multi-dimensional space;

execute, based on a first learning model which has learned first training data relating to a position change in each of a plurality of feature points relating to a three-dimensional face for training, encoding of reducing dimensions of the position change data and decoding of restoring the dimensions of the position change data, and calculate a first moving amount being a moving amount of the position change data before and after the encoding and the decoding;

execute the encoding and the decoding based on a second learning model which has learned second training data relating to a position change in each of a plurality of feature points relating to a two-dimensional face for training, and calculate a second moving amount being a moving amount of the position change data before and after the encoding and the decoding; and

estimate whether the two-dimensional face is shown in the moving image data based on the first moving amount and the second moving amount.

(9) The moving image processing system according to any one of Items (1) to (8), further including a motion request module configured to request the user to conduct a motion selected through a predetermined selection method from a plurality of motions relating to the face,

wherein the moving image data acquisition module is configured to acquire the moving image data when the selected motion is conducted by the user, and

wherein the estimation module is configured to estimate whether the two-dimensional face is shown in the moving image data based on a learning model corresponding to the selected motion out of the learning models each corresponding to a corresponding one of the plurality of motions.

(10) The moving image processing system according to any one of Items (1) to (9), further including an identity verification module configured to execute identity verification for the user based on a result of estimating whether the two-dimensional face is shown in the moving image data.

(11) The moving image processing system according to any one of Items (1) to (10), further including a registration module configured to register, as image data for face authentication for the user, a frame indicating the face of the user turned to a front direction out of a plurality of frames of the moving image data based on a result of estimating whether the two-dimensional face is shown in the moving image data.

**Claims**

1. A moving image processing system, comprising:

   a moving image data acquisition module configured to acquire moving image data relating to a moving image in which a face of a user conducting a predetermined motion is shown;
   a feature point detection module configured to detect a plurality of feature points relating to the face based on the moving image data; and
   an estimation module configured to estimate whether a two-dimensional face is shown in the moving image data based on a position change in each of the plurality of feature points in the moving image data and a learning model which has learned training data relating to a position change in each of a plurality of feature points relating to a face for training.

2. The moving image processing system according to claim **1,** wherein the estimation module is configured to execute predetermined filter processing to suppress noise relating to the moving image data, and calculate the position change.

3. The moving image processing system according to claim **2,** wherein the estimation module is configured to execute the filter processing which uses a derivative of Gaussian (DoG) filter.

4. The moving image processing system according to any one of claims 1 to 3, wherein the estimation module is configured to:

   set a local window including a calculation target frame that is a frame being a calculation target of the position change, a preceding frame that is a frame before the calculation target frame, and a following frame that is a frame after the calculation target frame;
   calculate the position change in the calculation target frame based on a position of each of the plurality of feature points detected from the preceding frame and a position of each of the plurality of feature points detected from the following frame; and

successively calculate the position change in each of a plurality of the calculation target frames while moving the local window on a time axis of the moving image data.

5. The moving image processing system according to any one of claims 1 to 3, wherein the estimation module is configured to:

calculate, based on the position change in at least one frame of the moving image data and the position change in a frame next to the at least one frame, a position change between the at least one frame and the next frame; and estimate whether the two-dimensional face is shown in the moving image data based further on the position change between the at least one frame and the next frame.

6. The moving image processing system according to claim **5,** wherein the estimation module is configured to calculate, based on the position change in at least one frame of the moving image data, a first weight coefficient associated with the at least one frame, the position change in a frame next to the at least one frame, and a second weight coefficient associated with the next frame, the position change between the at least one frame and the next frame.

7. The moving image processing system according to claim **5,** wherein the estimation module is configured to determine whether the position change in each of a plurality of frames of the moving image data is within a reference range, and calculate the position change between the at least one frame and the next frame when the position change is determined to be outside the reference range.

8. The moving image processing system according to any one of claims 1 to **3,** wherein the estimation module is configured to:

acquire position change data relating to a feature of the position change in a multi-dimensional space; execute, based on a first learning model which has learned first training data relating to a position change in each of a plurality of feature points relating to a three-dimensional face for training, encoding of reducing dimensions of the position change data and decoding of restoring the dimensions of the position change data, and calculate a first moving amount being a moving amount of the position change data before and after the encoding and the decoding; execute the encoding and the decoding based on a second learning model which has learned second training data relating to a position change in each of a plurality of feature points relating to a two-dimensional face for training, and calculate a second moving amount being a moving amount of the position change data before and after the encoding and the decoding; and estimate whether the two-dimensional face is shown in the moving image data based on the first moving amount and the second moving amount.

9. The moving image processing system according to any one of claims 1 to **3,** further comprising a motion request module configured to request the user to conduct a motion selected through a predetermined selection method from a plurality of motions relating to the face,

wherein the moving image data acquisition module is configured to acquire the moving image data when the selected motion is conducted by the user, and wherein the estimation module is configured to estimate whether the two-dimensional face is shown in the moving image data based on a learning model corresponding to the selected motion out of the learning models each corresponding to a corresponding one of the plurality of motions.

10. The moving image processing system according to any one of claims 1 to **3,** further comprising an identity verification module configured to execute identity verification for the user based on a result of estimating whether the two-dimensional face is shown in the moving image data.

11. The moving image processing system according to any one of claims 1 to **3,** further comprising a registration module configured to register, as image data for face authentication for the user, a frame indicating the face of the user turned to a front direction out of a plurality of frames of the moving image data based on a result of estimating whether the two-dimensional face is shown in the moving image data.

12. A moving image processing method, comprising:

a moving image data acquisition step of acquiring moving image data relating to a moving image in which a face of a user conducting a predetermined motion is shown; a feature point detection step of detecting a plurality of feature points relating to the face based on the moving image data; and an estimation step of estimating whether a two-dimensional face is shown in the moving image data based on a position change in each of the plurality of feature points in the moving image data and a learning model which has learned training data relating to a position change in each of a plurality of feature points relating to a face for training.

13. A program for causing a computer to function as:

a moving image data acquisition module configured to acquire moving image data relating to a moving image in which a face of a user conducting a predetermined motion is shown;
a feature point detection module configured to detect a plurality of feature points relating to the face based on the moving image data; and
an estimation module configured to estimate whether a two-dimensional face is shown in the moving image data based on a position change in each of the plurality of feature points in the moving image data and a learning model which has learned training data relating to a position change in each of a plurality of feature points relating to a face for training.

# FIG.1

1

**SERVER** 20

CONTROL UNIT 21

STORAGE UNIT 22

COMMUNICATION UNIT 23

N

NETWORK

**LEARNING TERMINAL** 10

CONTROL UNIT 11

STORAGE UNIT 12

COMMUNICATION UNIT 13

OPERATION UNIT 14

DISPLAY UNIT 15

**USER TERMINAL** 30

CONTROL UNIT 31

STORAGE UNIT 32

COMMUNICATION UNIT 33

OPERATION UNIT 34

DISPLAY UNIT 35

PHOTOGRAPHING UNIT 36

# FIG.2

# FIG.3

# FIG.4

**SERVER** 20

**DATA STORAGE MODULE** 200

LEARNING MODEL — M

USER DATABASE — DB2

MOVING IMAGE DATA ACQUISITION MODULE — 201

FEATURE POINT DETECTION MODULE — 202

ESTIMATION MODULE — 203

IDENTITY VERIFICATION MODULE — 204

**LEARNING TERMINAL** 10

**DATA STORAGE MODULE** 100

LEARNING MODEL — M

TRAINING DATABASE — DB1

LEARNING MODULE — 101

**USER TERMINAL** 30

DATA STORAGE MODULE — 300

DISPLAY CONTROL MODULE — 301

OPERATION RECEPTION MODULE — 302

# FIG.5

DB1

| POSITION CHANGE DATA FOR TRAINING | LABEL |
|---|---|
| POSITION CHANGE DATA 1 | 1 |
| POSITION CHANGE DATA 2 | 0 |
| POSITION CHANGE DATA 3 | 1 |
| . . . | . . . |

# FIG.6

DB2

| USER ID | MOVING IMAGE DATA | IDENTITY VERIFICATION DATA |
|---------|-------------------|----------------------------|
| u00001 | MOVING IMAGE DATA 1 | IDENTITY VERIFICATION DATA 1 |
| u00002 | MOVING IMAGE DATA 2 | IDENTITY VERIFICATION DATA 2 |
| u00003 | MOVING IMAGE DATA 3 | IDENTITY VERIFICATION DATA 3 |
| . . . | . . . | . . . |

FIG.7

DETECT FEATURE POINTS

EXECUTE FILTER PROCESSING
AND CALCULATE POSITION CHANGE

# FIG.8

# FIG.9

```
        10                                          20
┌─────────────────────┐              ┌─────────────────────┐
│  LEARNING TERMINAL  │              │       SERVER        │
└─────────────────────┘              └─────────────────────┘
          │                                     │
          ▼                                     │
┌─────────────────────┐  S1                     │
│  EXECUTE LEARNING OF│                          │
│  LEARNING MODEL     │                          │
└─────────────────────┘                          │
          │                                     ▼
          ▼           S2         ┌─────────────────────┐
┌─────────────────────┐         │  RECEIVE TRAINED     │  S3
│  TRANSMIT TRAINED   │────────▶│  LEARNING MODEL      │
│  LEARNING MODEL     │         └─────────────────────┘
└─────────────────────┘                   │
          │                               │
          ▼                               │
     ┌─────────┐                          │
     │   END   │                          │
     └─────────┘                          │
        30                                │
┌─────────────────────┐                   │
│   USER TERMINAL     │                   │
└─────────────────────┘                   │
          │          S4                   │         S4
          ▼                               ▼
┌─────────────────────┐         ┌─────────────────────┐
│ EXECUTE PROCESSING FOR│◀─────▶│ EXECUTE PROCESSING FOR│
│ APPLICATION FOR SERVICE│       │ APPLICATION FOR SERVICE│
└─────────────────────┘         └─────────────────────┘
          │                               │
          ▼          S6                   ▼
┌─────────────────────┐         ┌─────────────────────┐
│ RECEIVE REQUEST DATA│◀────────│ TRANSMIT REQUEST DATA│  S5
└─────────────────────┘         └─────────────────────┘
          │                               │
          ▼                               │
┌─────────────────────┐  S7              │
│ DISPLAY PHOTOGRAPHING│                  │
│ SCREEN              │                  │
└─────────────────────┘                  │
          │          S8                  ▼
┌─────────────────────┐         ┌─────────────────────┐
│ TRANSMIT MOVING IMAGE│───────▶│ RECEIVE MOVING IMAGE │  S9
│ DATA                │         │ DATA                 │
└─────────────────────┘         └─────────────────────┘
          │                               │
          │                               ▼
          │                     ┌─────────────────────┐
          │                     │ DETECT FEATURE POINTS│  S10
          │                     └─────────────────────┘
          ▼                               ▼
   ┌───────────┐                   ┌───────────┐
   │ CONTINUED │                   │ CONTINUED │
   └───────────┘                   └───────────┘
```

# FIG.10

30
USER TERMINAL

20
SERVER

EXECUTE FILTER PROCESSING — S11

CALCULATE POSITION CHANGE IN EACH FRAME — S12

CALCULATE POSITION CHANGE BETWEEN FRAMES — S13

INVALID TWO-DIMENSIONAL FACE? — S14
N
Y

S15
DISPLAY ERROR MESSAGE

END

S15
DISPLAY ERROR MESSAGE

END

30
USER TERMINAL

S16
PROCEED TO NEXT STEP OF IDENTITY VERIFICATION

END

S16
PROCEED TO NEXT STEP OF IDENTITY VERIFICATION

END

# FIG.11

20

**SERVER**  200

**DATA STORAGE MODULE**  200

LEARNING MODEL — M

USER DATABASE — DB2

MOVING IMAGE DATA ACQUISITION MODULE — 201

FEATURE POINT DETECTION MODULE — 202

ESTIMATION MODULE — 203

IDENTITY VERIFICATION MODULE — 204

MOTION REQUEST MODULE — 205

REGISTRATION MODULE — 206

10

**LEARNING TERMINAL**  100

**DATA STORAGE MODULE**  100

LEARNING MODEL — M

TRAINING DATABASE — DB1

LEARNING MODULE — 101

30

**USER TERMINAL**

DATA STORAGE MODULE — 300

DISPLAY CONTROL MODULE — 301

OPERATION RECEPTION MODULE — 302

# FIG.12

FIRST LEARNING MODEL

FIRST LEARNING MODEL

MOVING IMAGE DATA FOR TRAINING INDICATING THREE-DIMENSIONAL FACE

LEARNING

MULTI-DIMENSIONAL SPACE

LOAD

ENCODING

FIRST MOVEMENT AMOUNT

DECODING

MULTI-DIMENSIONAL SPACE

TWO-DIMENSIONAL SPACE

POSITION CHANGE DATA

COMPARE FIRST MOVEMENT AMOUNT AND SECOND MOVEMENT AMOUNT WITH EACH OTHER

SECOND LEARNING MODEL

SECOND LEARNING MODEL

MOVING IMAGE DATA FOR TRAINING INDICATING TWO-DIMENSIONAL FACE

LEARNING

MULTI-DIMENSIONAL SPACE

LOAD

ENCODING

SECOND MOVEMENT AMOUNT

DECODING

MULTI-DIMENSIONAL SPACE

TWO-DIMENSIONAL SPACE

POSITION CHANGE DATA

EP 4 625 218 A1

## INTERNATIONAL SEARCH REPORT

| | International application No. |
|---|---|
| | **PCT/JP2023/046496** |

| A. CLASSIFICATION OF SUBJECT MATTER |
|---|
| ***G06F 21/32***(2013.01)i |
| FI: G06F21/32 |
| According to International Patent Classification (IPC) or to both national classification and IPC |

| B. FIELDS SEARCHED |
|---|
| Minimum documentation searched (classification system followed by classification symbols) |
| G06F21/32; G06T1/00; G06T7/00 |
| Documentation searched other than minimum documentation to the extent that such documents are included in the fields searched |
| Published examined utility model applications of Japan 1922-1996<br>Published unexamined utility model applications of Japan 1971-2024<br>Registered utility model specifications of Japan 1996-2024<br>Published registered utility model applications of Japan 1994-2024 |
| Electronic data base consulted during the international search (name of data base and, where practicable, search terms used) |
| |

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2012-069133 A (NEC CORPORATION) 05 April 2012 (2012-04-05)<br>    paragraphs [0030]-[0036], [0082]-[0084], fig. 1-2, 8 | 1-7, 9-13 |
| A | | 8 |
| Y | US 2019/0347388 A1 (FUTUREWEI TECHNOLOGIES, INC.) 14 November 2019 (2019-11-14)<br>    paragraph [0034] | 1-7, 9-13 |
| Y | JP 2021-522591 A (IDENTY INC.) 30 August 2021 (2021-08-30)<br>    abstract | 1-7, 9-13 |
| Y | WO 2020/170719 A1 (SONY GROUP CORPORATION) 27 August 2020 (2020-08-27)<br>    paragraph [0042] | 2-3 |
| Y | JP 2023-063314 A (NEC CORPORATION) 09 May 2023 (2023-05-09)<br>    paragraphs [0023]-[0036], [0049] | 9, 11 |

✓ Further documents are listed in the continuation of Box C.     ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| | International application No. |
|---|---|
| | **PCT/JP2023/046496** |

**C.    DOCUMENTS CONSIDERED TO BE RELEVANT**

| Category* | Citation of document, with indication, where appropriate, of the relevant passages | Relevant to claim No. |
|---|---|---|
| A | US 2023/0102682 A1 (INTUIT INC.) 30 March 2023 (2023-03-30) paragraph [0040] | 1-13 |
| A | US 2021/0182539 A1 (REALNETWORKS, INC.) 17 June 2021 (2021-06-17) abstract | 1-13 |
| A | WO 2010/137157 A1 (KABUSHIKI KAISHA TOSHIBA) 02 December 2010 (2010-12-02) abstract | 1-13 |

Form PCT/ISA/210 (second sheet) (July 2022)

## INTERNATIONAL SEARCH REPORT
### Information on patent family members

International application No.

**PCT/JP2023/046496**

| Patent document cited in search report | | | Publication date (day/month/year) | Patent family member(s) | | | Publication date (day/month/year) |
|---|---|---|---|---|---|---|---|
| JP | 2012-069133 | A | 05 April 2012 | (Family: none) | | | |
| US | 2019/0347388 | A1 | 14 November 2019 | (Family: none) | | | |
| JP | 2021-522591 | A | 30 August 2021 | US abstract | 2021/0103749 | A1 | |
| | | | | WO | 2019/207557 | A1 | |
| | | | | EP | 3540636 | A1 | |
| | | | | KR | 10-2021-0032310 | A | |
| | | | | CA | 3098286 | A1 | |
| WO | 2020/170719 | A1 | 27 August 2020 | US paragraph [0105] | 2022/0358197 | A1 | |
| | | | | EP | 3929868 | A1 | |
| JP | 2023-063314 | A | 09 May 2023 | US paragraphs [0033]-[0047], [0060] | 2020/0143186 | A1 | |
| | | | | WO | 2020/095350 | A1 | |
| | | | | EP | 3879419 | A1 | |
| US | 2023/0102682 | A1 | 30 March 2023 | EP | 4160553 | A1 | |
| US | 2021/0182539 | A1 | 17 June 2021 | WO | 2021/119029 | A1 | |
| WO | 2010/137157 | A1 | 02 December 2010 | US abstract | 2012/0063671 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2023029968 A